# EUROPÄISCHE PATENTSCHRIFT

(11) **EP 2 438 322 B1**
(45) Veröffentlichungstag und Bekanntmachung des Hinweises auf die Patenterteilung: **09.10.2013**
(21) Anmeldenummer: 10720615.3
(22) Anmeldetag: 19.05.2010
(51) Int. Cl.: F16D 25/061, F16D 25/08, F16H 63/30, F16H 57/02

(54) **ANORDNUNG MIT ZUMINDEST EINER KLAUENKUPPLUNG**
ARRANGEMENT COMPRISING AT LEAST ONE DOG CLUTCH
ENSEMBLE COMPRENANT AU MOINS UN EMBRAYAGE À CRABOTS

(30) Priorität: 04.06.2009 DE 102009026710
(43) Veröffentlichungstag der Anmeldung: 11.04.2012
(73) Patentinhaber: ZF Friedrichshafen AG, 88038 Friedrichshafen (DE)
(72) Erfinder: ZIEMER, Peter, 88069 Tettnang (DE); TIESLER, Peter, 88074 Meckenbeuren (DE); SCHMIDT, Thilo, 88074 Meckenbeuren (DE)
(86) Internationale Anmeldenummer: PCT/EP2010/056908
(87) Internationale Veröffentlichungsnummer: WO 2010/139558

(56) Entgegenhaltungen:
- DE-A1-102005 035 156
- GB-A- 2 368 102
- US-A- 5 667 330
- US-A- 6 079 539
- US-A- 6 131 686

## Beschreibung

Die vorliegende Erfindung betrifft eine Anordnung mit zumindest einer Klauenkupplung gemäß der im Oberbegriff des Patentanspruches 1 näher definierten Art.

Aus der Fahrzeugtechnik sind Anordnungen mit zumindest einer Klauenkupplung als Schaltelement zum Verbinden einer Welle eines Getriebes mit einem Bauteil bekannt. Beispielsweise in der Druckschrift GB 2 368 102 A wird ein automatisches Getriebe mit einer Einrichtung zum Entkoppeln des Getriebes von einem Antriebsstrang eines Fahrzeuges beschrieben. Die Einrichtung ist als Klauenkupplung ausgebildet, welche hydraulisch über einen Betätigungskolben betätigt wird, der im Inneren einer Welle angeordnet ist. Der Betätigungskolben wird einseitig mit Druck beaufschlagt, um gegen eine Rückstellfeder bewegt zu werden. Zum Betätigen der Schaltklaue wird ein mit dem Betätigungskolben gekoppelter Schaltfinger verwendet, der durch eine Ausnehmung der Welle geführt wird.

Ferner ist aus der Druckschrift US 5 667 330 A eine weitere Anordnung mit einer Klauenkupplung als Schaltelement bekannt. Bei der bekannten Anordnung wird die Klauenkupplung verwendet, um eine Zapfwelle mit einer Getriebeausgangswelle eines Traktors zu verbinden. Dazu wird ein Betätigungskolben im Inneren der Ausgangswelle einseitig gegen eine Rückstellfeder hydraulisch beaufschlagt, wobei die Schaltklaue über einen Bolzen betätigt wird, der durch eine Ausnehmung der Ausgangswelle von dem Betätigungskolben zur Schaltklaue geführt wird. Somit wird bei den vorgenannten, bekannten Anordnungen eine Betätigung der Klauenkupplung im Inneren der Welle realisiert.

Schließlich offenbart die Druckschrift US 6 079 539 A eine Achsabkopplungsvorrichtung, bei der über eine Kupplungsmuffe ein erstes Antriebswellenteil mit einem zweiten Antriebswellenteil gekoppelt beziehungsweise voneinander entkoppelt werden können. Die Kupplungsmuffe ist drehfest auf einem der Antriebswellenteile gelagert und kann zum Koppeln beziehungsweise Entkoppeln axial über eine Schaltgabel verschoben werden. Bei dieser Art der Anordnung ist ein nicht unerheblicher Bauraum erforderlich

In der gattungsbildenden DE102005035156A1 ist ein formschlüssiges Schaltelement beschrieben, welches als Klauenkupplung ausgebildet und einseitig hydraulisch betätigbar ist. Die Klauenkupplung ist im Wesentlichen innerhalb eines Lagerträgers des Getriebes angeordnet und weist Klauenkupplung eine Schaltklaue auf, welche auch einen Betätigungskolben als gemeinsames Bauteil bildet. Nachteiligerweise dreht sich die Schaltklaue mit dem Sonnenrad relativ zu dem feststehenden Gehäuse, wodurch es zur Reibung zwischen der Dichtung und dem Gehäuse kommt. Zudem ist eine solche Lösung, die innerhalb einer Welle angeordnet ist, nicht bauraumneutral in einem Automatikgetriebe unterzubringen, da dieses eine durchgehende zentrale Welle aufweist.

Der vorliegenden Erfindung liegt die Aufgabe zu Grunde, eine möglichst bauraumneutrale Anordnung einer Klauenkupplung in einem Getriebe vorzusehen.

Diese Aufgabe wird erfindungsgemäß durch die Merkmale des Patentanspruches 1 gelöst. Weitere vorteilhafte Ausgestaltungen ergeben sich aus den Zeichnungen und den Unteransprüchen.

Demnach wird ein Getriebe mit einer Anordnung mit zumindest einer Klauenkupplung oder dergleichen vorgeschlagen, welche mit wenigstens einem Bauteil des Getriebes verbindbar ist, wobei die Klauenkupplung im Wesentlichen radial innerhalb eines Lagerträgers oder dergleichen des Getriebes angeordnet ist. Auf diese Weise wird ein möglichst bauraumneutrales Klauenschaltelement insbesondere für ein vorzugsweise planetenradsatzbasierendes Automatgetriebe realisiert. Jedoch kann die vorgeschlagene Anordnung auch in anderen Getrieben eingesetzt werden. Aufgrund der Anordnung im Bereich des Lagerträgers kann der vorhandene Bauraum in dem Getriebegehäuse optimal ausgenutzt werden.

Vorzugsweise kann bei dem vorgeschlagenen Getriebe die Schaltklaue der zumindest einseitig hydraulisch betätigten Klauenkupplung auch den Betätigungskolben als gemeinsames Bauteil bilden, wobei der Zylinder zur hydraulischen Beaufschlagung beziehungsweise zum Betätigen der Klauenkupplung gehäusefest angeordnet ist. Da die Schaltklaue und der Betätigungskolben als ein gemeinsames Bauteil ausgebildet sind, kann die Anzahl der erforderlichen Bauteile reduziert werden.

Darüber hinaus kann bei dem vorgeschlagenen Getriebe die Schaltklaue radial außen an einer Welle z. B. einer Antriebswelle oder dergleichen des Getriebes axial verschiebbar angeordnet sein.

Im Rahmen der vorliegenden Erfindung kann vorgesehen sein, dass die Schaltklaue zum Festsetzen eines Bauteils des Getriebes drehfest an dem gehäusefesten Lagerträger z.B. eines Stirnrades oder dergleichen befestigt ist. Somit kann durch die Schaltklaue ein beliebiges Radsatzelement des Getriebes festgesetzt werden. Vorzugsweise kann auch zum Beispiel ein Bauteil eines Planetenradsatzes, z. B. ein Sonnenrad oder dergleichen durch die Schaltklaue mit dem Gehäuse verbunden werden.

Beispielsweise kann dazu vorgesehen sein, dass die Schaltklaue in ihrer geschlossenen Position zum Beispiel über eine Kronverzahnung, eine Steckverzahnung oder dergleichen mit dem festzusetzenden Bauteil, z.B. mit dem Sonnenrad, verbunden wird.

Gemäß einer möglichen Weiterbildung der Erfindung kann vorgesehen sein, dass der Lagerträger und der Zylinder zum Betätigen der Klauenkupplung als separate Bauteile ausgeführt sind. Es ist auch denkbar, dass der Lagerträger und der Zylinder als ein gemeinsames Bauteil ausgeführt sind. Beispielsweise kann der Lagerträger eine entsprechende Ausnehmung aufweisen, welche quasi den Druckraum oder Zylinderraum für den Betätigungskolben beziehungsweise für die als Betätigungskolben ausgebildete Schaltklaue bildet.

Im Rahmen einer weiteren Ausführung der Erfindung kann vorgesehen sein, dass axial die verschiebbare Schaltklaue drehbar ausgeführt ist Bei dieser Ausführung kann die Schaltklaue vorzugsweise zum Verbinden von mindestens zwei Bauteilen des Getriebes verwendet werden.

Gemäß einer nächsten Weiterbildung der Erfindung kann vorgesehen sein, dass die Schaltklaue beispielsweise ein Stirnrad mit einem Planetenträger des Getriebes verbindet. Dazu kann die Schaltklaue z.B. kontinuierlich über eine Steckverzahnung oder dergleichen mit dem Stirnrad verbunden sein, wobei die Schaltklaue in ihrer geschlossenen Position über eine Kronverzahnung oder dergleichen mit dem Planetenträger des Planetenradsatzes des Getriebes verbunden wird.

Es ist jedoch auch möglich, dass die Schaltklaue zum Verblocken zweier Bauteile des Planetenradsatzes des Getriebes verwendet wird. Beispielsweise können als zu verblockende Bauteile ein Planetenträger und ein Sonnenrad des Planetenradsatzes miteinander verbunden werden. Es können aber auch andere Bauteile über die Klauenkupplung miteinander verblockt werden. Zum Verblocken kann die Schaltklaue z.B. kontinuierlich mit dem Planetenträger verbunden sein, wobei die Schaltklaue in ihrer geschlossenen Position über eine Kronverzahnung oder dergleichen mit dem Sonnenrad des Planetenradsatzes verbunden ist. Auf diese Weise kann der Planetenradsatz bei Bedarf verblockt werden.

Unabhängig von den verschiedenen Ausführungen der Erfindung kann vorgesehen sein, dass die Schaltklaue zum Bewegen in ihre geschlossene Position z. B. hydraulisch betätigbar ist, wobei eine Rückstellfeder zum Halten der Schaltklaue in ihrer geöffneten Position verwendet wird. Es ist jedoch auch möglich, dass die Schaltklaue beidseitig hydraulisch betätigt wird, ohne dass eine Rückstellfeder erforderlich ist.

Vorzugsweise kann die Schaltklaue und das korrespondierende Gegenstück an dem zu schaltenden Bauteil zum Beispiel über eine gemeinsame Kronverzahnung oder auch über eine gemeinsame Steckverzahnung oder dergleichen verbunden werden.

Gemäß einer vorteilhaften Weiterbildung können die Kronverzahnung oder auch die Steckverzahnung der Schaltklauenhälften ballig und/oder konisch beziehungsweise mit Hinterschnitt und/oder stirnseitig mit einer Fase oder einem Radius und/oder mit einem Zentrierkonus ausgeführt werden.

Vorzugsweise kann auch ein Hohlrad als Bauteil des Planetenradsatzes mit der Schaltklaue gekoppelt werden. Es können aber auch andere Bauteile des Radsatzes beziehungsweise des Planetenradsatzes mit der Schaltklaue geschaltet werden.

Es ist auch möglich, dass die Schaltklaue über eine Steckverzahnung mit der Antriebswelle drehfest verbunden und damit auch zentriert ist. Das korrespondierende Gegenstück der Schaltklaue an dem zu schaltenden Bauteil kann vorzugsweise über ein Gleitlager oder dergleichen auf der Welle gelagert sein.

Bei einer beidseitig hydraulischen Betätigung können bei der erfindungsgemäβen Anordnung zum Beispiel Federelemente vorgesehen sein, die eine Vorpositionierung des Betätigungskolbens im drucklosen Zustand ermöglichen. Zum Beispiel kann eine Druckfeder im Kolbenraum für den geöffneten Zustand der Schaltklaue beziehungsweise für den geschlossenen Zustand der Schaltklaue verwendet werden.

Nachfolgend wird die vorliegende Erfindung anhand der Zeichnungen weiter erläutert. Es zeigen:
- Fig. 1: eine schematische, geschnittene Teilansicht einer ersten möglichen Ausführungsvariante einer erfindungsgemäßen Anordnung mit einer Klauenkupplung in einem Automatgetriebe in Planetenbauweise;
- Fig. 2: eine schematische, geschnittene Teilansicht einer zweiten möglichen Ausführungsvariante der Anordnung mit der Klauenkupplung;
- Fig. 3: eine schematische, geschnittene Teilansicht einer dritten möglichen Ausführungsvariante der Anordnung mit der Klauenkupplung;
- Fig. 4: eine schematische, geschnittene Teilansicht einer nicht zur Erfindung gehörenden Ausführungsvariante der Anordnung mit der Klauenkupplung; und
- Fig. 5: eine schematische, geschnittene Teilansicht einer anderen, nicht zur Erfindung gehörenden Ausführungsvariante der Anordnung mit der Klauenkupplung.

In den Figuren sind verschiedene Ausführungsvarianten einer erfindungsgemäßen Anordnung mit einer Klauenkupplung in einem Automatgetriebe in Planetenbauweise exemplarisch dargestellt, wobei die Schaltklaue mit wenigstens einem Bauteil des Getriebes verbindbar ist. Gleiche Bauteile sind mit denselben Bezugszeichen in den verschiedenen Figuren bezeichnet.

Erfindungsgemäß ist die Klauenkupplung im Wesentlichen innerhalb eines Lagerträgers 1 z. B. eines Stirnrades 2 angeordnet ist, um eine bauraumneutrale Anordnung der Klauenkupplung in dem Automatgetriebe zu realisieren. Die Schaltklaue 3 der zumindest einseitig hydraulisch betätigten Klauenkupplung ist gleichzeitig auch als Betätigungskolben ausgeführt, so dass ein Bauteil eingespart werden kann. Zudem ist der Zylinder 4 der Klauenkupplung unabhängig von der jeweiligen Ausführungsvariante gehäusefest über den Lagerträger 1 gehalten. Ferner ist die Schaltklaue 3 radial in einer Steckverzahnung 13, 21, 24 axial verschiebbar gelagert.

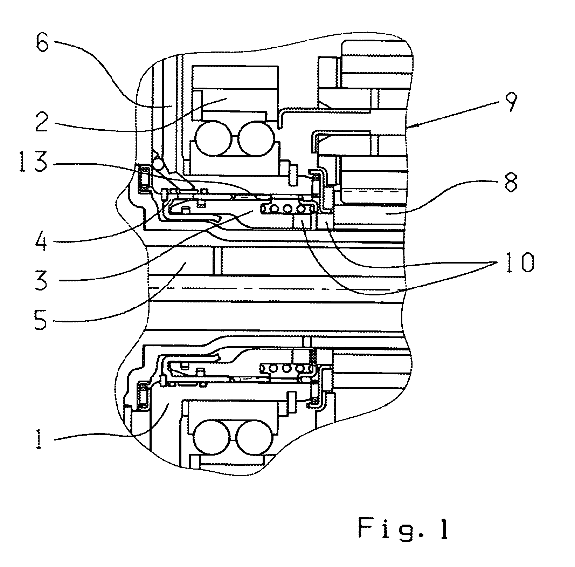

Gemäß Figur 1 ist eine erste Ausführungsvariante der erfindungsgemäßen Anordnung dargestellt. Bei dieser Ausführungsvariante ist die Schaltklaue 3 gleichzeitig als Betätigungskolben der Klauenkupplung in Form eines gemeinsamen Bauteils ausgeführt. Die Schaltklaue 3 ist über eine Steckverzahnung 13 drehfest mit dem Lagerträger 1 des Stirnrades 2 verbunden und somit gehäusefest. Zur axialen Bewegung der Schaltklaue 3 ist der Zylinder 4 vorgesehen, der mit Druckmittel über einen Druckmittel-Versorgungskanal 6 beaufschlagbar ist, der durch den Lagerträger 1 verläuft. Bei entsprechender Druckbeaufschlagung wird die Schaltklaue 3 in der Zeichnungsebene nach rechts in ihre geschlossene Position bewegt, wobei die Bewegung entgegen der Kraft einer Rückstellfeder 7 erfolgt. Somit kann die Schaltklaue 3 über die Rückstellfeder 7 wieder nach beendeter Druckbeaufschlagung in ihre geöffnete Position in der Zeichnungsebene nach links bewegt werden.

Die Schaltklaue 3 dient bei der ersten Ausführungsvariante dazu ein Sonnenrad 8 des Planetenradsatzes 9 des Automatgetriebes gehäusefest zu setzen. Dazu weist die Schaltklaue 3 eine gemeinsame Kronverzahnung 10 mit dem Sonnenrad 8 des Planetenradsatzes 9 auf. Zentriert wird die Schaltklaue 3 über die gemeinsame Steckverzahnung 13 mit dem Lagerträger 1. Die Abdichtung des Druckraumes im Bereich der Schaltklaue 3 kann über Rechteckringe oder dergleichen erfolgen. Es ist auch möglich, dass durch ein entsprechendes geringes Spiel zwischen dem Zylinder 4 und der Schaltklaue 3 eine Abdichtung ohne Dichtelement ermöglicht wird.

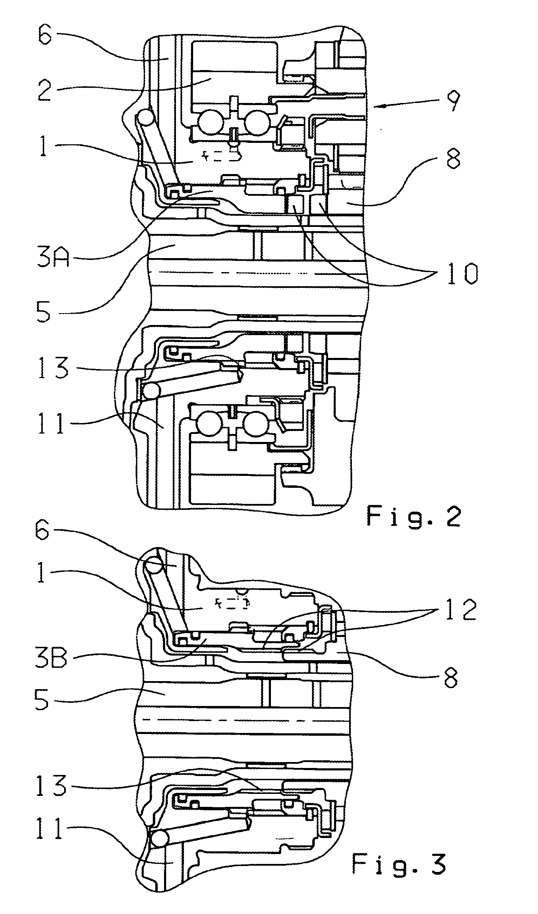

In Figur 2 ist eine zweite mögliche Ausführungsvariante der Anordnung dargestellt, bei der die Schaltklaue 3A beidseitig hydraulisch betätigt wird, so dass im Gegensatz zur ersten Ausführungsvariante keine Rückstellfeder 7 erforderlich ist. Die beidseitige hydraulische Betätigung der Schaltklaue 3A hat ferner den Vorteil, dass im geschalteten Zustand der Haltedruck niedriger sein kann und dass ohne Druck bzw. ohne nennenswerten Druck im System der geschaltete beziehungsweise abgeschaltete Zustand gehalten werden kann. Zudem kann die Reaktionsgeschwindigkeit der Schaltklaue 3A durch aktives Aus- beziehungsweise Einlegen erheblich gesteigert werden, weil die Drücke zum Ein- und Auslegung der Schaltklaue 3A entsprechend hoch ausgelegt werden können.

Bei der zweiten Ausführungsvariante bildet im Unterschied zur ersten Ausführungsvariante die Lagerplatte beziehungsweise der Lagerträger 1 auch den Zylinder für die Schaltklaue 3A zur hydraulischen Betätigung. Auf diese Weise kann ein Bauteil eingespart werden. Der Lagerträger 1 bildet eine Ausnehmung als Druckraum für die Schaltklaue 3A, der über den Druckmittel-Versorgungskanal 6 mit Druckmittel versorgt wird. Der weitere Druckraum zum Zurückstellen der Schaltklaue 3A in ihre geöffnete Position wird über einen weiteren Druckmittel-Versorgungskanal 11 mit Druckmittel versorgt. Das Druckmittel wird durch die gemeinsame Steckverzahnung 13 zwischen dem Lagerträger 1 und der Schaltklaue 3A geleitet. Dabei ist es für einen besseren Durchfluss zweckmäßig, wenn einzelne Zähne an der Steckverzahnung 13 ausgelassen werden.

Auch bei der zweiten Ausführungsvariante ist die Schaltklaue 3A gehäusefest über die Steckverzahnung 13 mit dem Lagerträger 1 verbunden und kann in ihrer geschlossenen Position über die gemeinsame Kronverzahnung 10 mit dem Sonnenrad 8 des Planetenradsatzes 9 verbunden werden, so dass das Sonnenrad 8 durch die Schaltklaue 3A im geschalteten Zustand gehäusefest gesetzt wird.

Gemäß Figur 3 wird eine dritte mögliche Ausführungsvariante der Anordnung gezeigt. Auch bei der dritten Ausführungsvariante wird eine beidseitige hydraulische Betätigung der Schaltklaue 3B realisiert. Im Unterschied zur zweiten Ausführungsvariante wird die Verbindung zwischen der Schaltklaue 3B und dem Sonnenrad 8 des Planetenradsatzes 9 des Automatgetriebes über eine gemeinsame Steckverzahnung 12 realisiert. Somit wird auch bei der dritten Ausführungsvariante das Sonnenrad 8 in geschlossener Position der Schaltklaue 3B, also wenn sich die Schaltklaue 3B in der Zeichnungsebene rechts befindet, gehäusefest gesetzt.

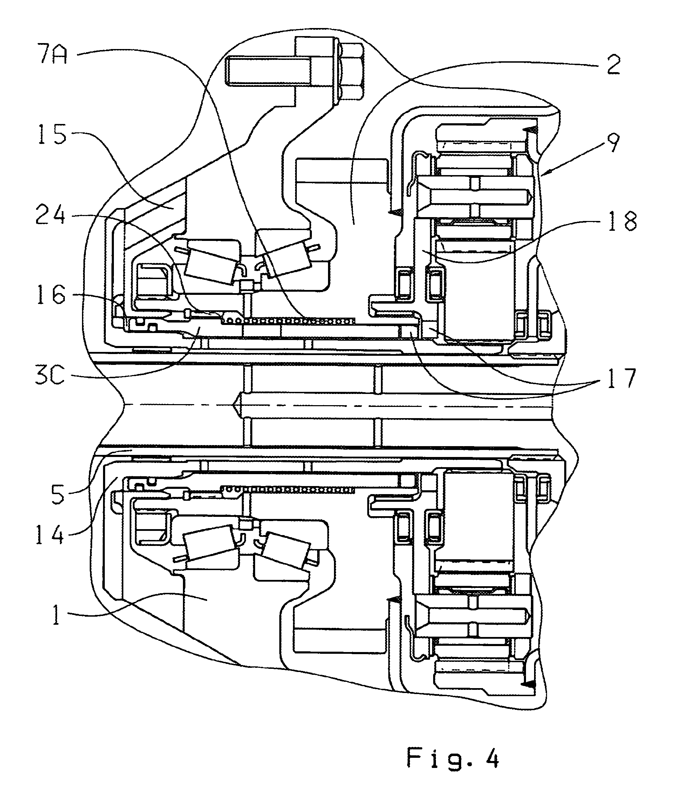

In Figur 4 ist eine nicht beanspruchte Ausführungsvariante der Anordnung mit der Klauenkupplung in dem Automatgetriebe in Planetenbauweise dargestellt. Auch bei dieser Ausführungsvariante sind der Betätigungskolben und die Schaltklaue 3C als ein gemeinsames Bauteil ausgeführt. Im Unterschied zu den ersten drei Ausführungsvarianten ist bei dieser Ausführungsvariante die Schaltklaue 3C drehbar beziehungsweise rotierend auf einem gehäusefesten Träger 14 (Sonnenrad) gelagert. Eine Abdichtung des Druckraumes nach außen hin kann über Rechteckringe oder dergleichen erfolgen. Jedoch kann auch durch eine entsprechende Einstellung des Spiels zwischen dem als Zylinder fungierenden Bauteil und der Schaltklaue 3C auf eine Abdichtung verzichtet werden.

Die axiale Betätigung der Schaltklaue 3C erfolgt bei dieser Ausführungsvariante einseitig hydraulisch gegen eine Rückstellfeder 7A. Über einen Druckmittel- bzw. Drucköl-Versorgungskanal 15 kann Drucköl in den Druckraum 16 gelangen, um die Schaltklaue 3C in ihre geschlossene Position gegen die Federkraft der Rückstellfeder 7A zu bewegen.

Bei dieser Ausführungsvariante ist die Schaltklaue 3C über eine gemeinsame Steckverzahnung 24 drehfest mit dem Stirnrad 2 verbunden, sodass die Schaltklaue 3C mit dem Stirnrad 2 mitdreht. In der geschlossenen Position der Schaltklaue 3C wird diese über eine gemeinsame Kronverzahnung 17 mit dem Planetenträger 18 des Planetenradsatzes 9 verbunden.

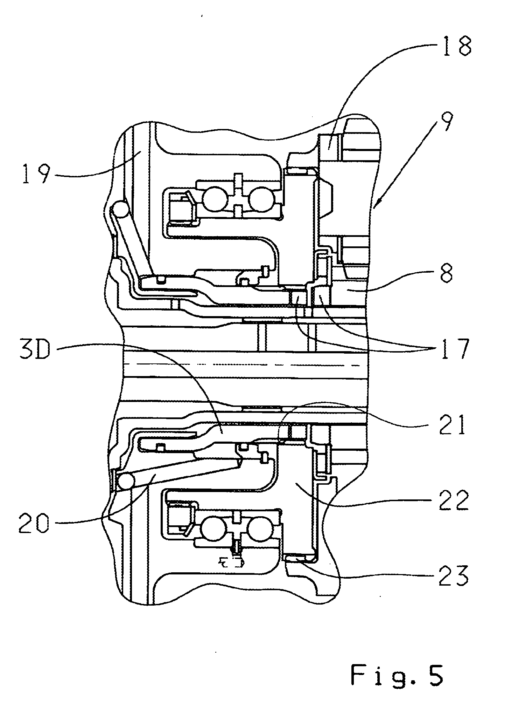

Gemäß Figur 5 ist eine nicht beanspruchte Ausführungsvariante der Anordnung gezeigt. Unter anderem unterscheidet sich diese Ausführungsvariante gegenüber der vorigen Ausführungsvariante dadurch, dass die Schaltklaue 3D beidseitig hydraulisch betätigt wird. Zum Schließen der Schaltklaue 3D wird diese mit Druckmittel über einen im Lagerträger 1 vorgesehenen Druckmittel-Versorgungskanal 19 beaufschlagt. Um die Schaltklaue 3D in ihre geöffnete Position zu bringen, wird die Schalt-klaue 3D mit Druckmittel über den Versorgungskanal 20 versorgt. Die rotierende Schaltklaue 3D kann über eine Spaltdichtung gegenüber dem Lagerträger 1 abgedichtet werden.

Bei dieser Ausführungsvariante ist die Schaltklaue 3D über eine Steckverzahnung 21 mit einer Lagerung 22 des Planetenträgers 18 verbunden, der über eine Mitnahme 23 mit der Lagerung 22 gekoppelt ist. Um eine Verblockung des Planetenradsatzes 9 zu realisieren, kann die Schaltklaue 3D in ihrer geschlossenen Position über die gemeinsame Kronverzahnung 17 mit dem Sonnenrad 8 des Planetenrad-satzes 9 verbunden werden.

Unabhängig von den jeweiligen Ausführungsvarianten ist die Schaltklaue 3, 3A, 3B, 3C und 3D jeweils in ihrer geöffneten Position in den Figuren 1 bis 5 dargestellt.

### Bezugszeichen

- 1: Lagerträger
- 2: Stirnrad
- 3: Schaltklaue
- 3A: Schaltklaue
- 3B: Schaltklaue
- 3C: Schaltklaue
- 3D: Schaltklaue
- 4: Zylinder
- 5: Welle
- 6: Versorgungskanal
- 7: Rückstellfeder
- 7A: Rückstellfeder
- 8: Sonnenrad
- 9: Planetenradsatz
- 10: Kronverzahnung zwischen Schaltklaue und Sonnenrad
- 11: Versorgungskanal
- 12: Steckverzahnung zwischen Schaltklaue und Sonnenrad
- 13: Steckverzahnung zwischen Schaltklaue und Lagerträger
- 14: Sonnenradträger
- 15: Versorgungskanal
- 16: Druckraum
- 17: Kronverzahnung zwischen Schaltklaue und Planetenträger
- 18: Planetenträger
- 19: Versorgungskanal
- 20: Versorgungskanal
- 21: Steckverzahnung zwischen Schaltklaue und Lagerung des Planetenträgers
- 22: Lagerung des Planetenträgers
- 23: Mitnahme
- 24: Steckverzahnung zwischen Schaltklaue und Stirnrad

## Patentansprüche

1. Getriebe mit einer Anordnung mit zumindest einer Klauenkupplung, wobei die Anordnung mit wenigstens einem Bauteil des Getriebes verbindbar ist, und wobei die zumindest einseitig hydraulisch betätigte Klauenkupplung im Wesentlichen innerhalb eines Lagerträgers (1) des Getriebes angeordnet ist, wobei die Klauenkupplung eine Schaltklaue (3, 3A, 3B, 3C, 3D) aufweist, welche auch einen Betätigungskolben als gemeinsames Bauteil bildet, wobei ein Zylinder (4) zum Betätigen der Klauenkupplung gehäusefest ist, **dadurch gekennzeichnet, dass** die Schaltklaue (3, 3A, 3B) radial außen an einer Welle (5) axial verschiebbar angeordnet ist und zum Festsetzen eines Bauteiles des Getriebes drehfest an dem gehäusefesten Lagerträger (1) befestigt ist.

2. Getriebe nach Anspruch 1, **dadurch gekennzeichnet, dass** die Schaltklaue (3, 3A) in ihrer geschlossenen Position über eine Kronverzahnung (10) mit einem Sonnenrad (8) eines Planetenradsatzes (9) eines Automatgetriebes verbindbar ist.

3. Getriebe nach Anspruch 1, **dadurch gekennzeichnet, dass** die Schaltklaue (3B) in ihrer geschlossenen Position über eine Steckverzahnung (12) mit dem Sonnenrad (8) des Planetenradsatzes (9) des Automatgetriebes verbindbar ist.

4. Getriebe nach einem der vorangehenden Ansprüche, **dadurch gekennzeichnet, dass** der Lagerträger (1) und der Zylinder (4) zum Betätigen der Klauenkupplung als separate Bauteile ausgeführt sind.

5. Getriebe nach einem der Ansprüche 1 bis 3, **dadurch gekennzeichnet, dass** der Lagerträger (1) und der Zylinder (4) zum Betätigen der Klauenkupplung als ein gemeinsames Bauteil ausgeführt sind.

6. Getriebe nach einem der vorangehenden Ansprüche, **dadurch gekennzeichnet, dass** die Schaltklaue (3, 3C) zum Bewegen in ihre geschlossene Position hydraulisch betätigbar ist, wobei eine Rückstellfeder (7, 7A) zum Halten der Schaltklaue (3, 3C) in ihrer geöffneten Position vorgesehen ist.

7. Getriebe nach einem der Ansprüche 1 bis 5, **dadurch gekennzeichnet, dass** die Schaltklaue (3A, 3B, 3D) beidseitig hydraulisch betätigbar ist.

8. Getriebe nach einem der vorangehenden Ansprüche, **dadurch gekennzeichnet, dass** die Kronverzahnung (10, 17) oder die Steckverzahnung (12, 13, 21, 24) ballig und/oder konisch oder mit Hinterschnitt und/oder stirnseitig mit einer Fase oder einem Radius und/oder mit einem Zentrierkonus ausgeführt sind.

## Claims

1. Transmission having an arrangement comprising at least one dog clutch, the arrangement being connectable to at least one component in the transmission, and the dog clutch, actuated hydraulically at least on one side, being arranged essentially within a bearing carrier (1) of the transmission, the dog clutch having a shift dog (3, 3A, 3B, 3C, 3D) which also forms an actuating piston as a common component, a cylinder (4) for actuating the dog clutch being fixed to the housing, **characterized in that** the shift dog (3, 3A, 3B) is arranged axially displaceably on a shaft (5) radially on the outside and, for securing a component of the transmission, is fastened fixedly in terms of rotation to the housing-fixed bearing carrier (1).

2. Transmission according to Claim 1, **characterized in that** the shift dog (3, 3A), in its closed position, is connectable via a contrate toothing (10) to a sun wheel (8) of a planet wheel set (9) of an automatic transmission.

3. Transmission according to Claim 1, **characterized in that** the shift dog (3B), in its closed position, is connectable via an insertion toothing (12) to the sun wheel (8) of the planet wheel set (9) of the automatic transmission.

4. Transmission according to one of the preceding claims, **characterized in that** the bearing carrier (1) and the cylinder (4) for actuating the dog clutch are formed as separate components.

5. Transmission according to one of Claims 1 to 3, **characterized in that** the bearing carrier (1) and the cylinder (4) for actuating the dog clutch are formed as one common component.

6. Transmission according to one of the preceding claims, **characterized in that** the shift dog (3, 3C) is actuable hydraulically in order to be moved into its closed position, a return spring (7, 7A) for holding the dog clutch (3, 3C) in its open position being provided.

7. Transmission according to one of Claims 1 to 5, **characterized in that** the shift dog (3A, 3B, 3D) is actuable hydraulically on both sides.

8. Transmission according to one of the preceding claims, **characterized in that** the contrate toothing (10, 17) or the insertion toothing (12, 13, 21, 24) are formed so as to be crowned and/or conical or with an undercut and/or, on the end face, with a chamfer or a radius and/or with a centring cone.

## Revendications

1. Transmission comprenant un agencement avec au moins un embrayage à crabot, l'agencement pouvant être connecté à au moins un composant de la transmission, et l'embrayage à crabot actionné au moins d'un côté hydrauliquement étant disposé essentiellement à l'intérieur d'un support de palier (1) de la transmission, l'embrayage à crabot présentant un crabot d'accouplement (3, 3A, 3B, 3C, 3D) qui forme également un piston d'actionnement en tant que composant commun, un cylindre (4) pour actionner l'embrayage à crabot étant fixé au boîtier, **caractérisée en ce que** le crabot d'accouplement (3, 3A, 3B) est disposé de manière déplaçable axialement radialement à l'extérieur sur un arbre (5) et, pour la fixation d'un composant de la transmission, est fixé de manière solidaire en rotation sur le support de palier (1) fixé au boîtier.

2. Transmission selon la revendication 1, **caractérisée en ce que** le crabot d'accouplement (3, 3A) dans sa position fermée, peut être connecté par le biais d'une couronne dentée (10) à une roue solaire (8) d'un train épicycloïdal (9) d'une transmission automatique.

3. Transmission selon la revendication 1, **caractérisée en ce que** le crabot d'accouplement (3B) peut être connecté, dans sa position fermée, par le biais d'une denture enfichable (12) à la roue solaire (8) du train épicycloïdal (9) de la transmission automatique.

4. Transmission selon l'une quelconque des revendications précédentes, **caractérisée en ce que** le support de palier (1) et le cylindre (4) pour l'actionnement de l'embrayage à crabot sont réalisés sous forme de composants séparés.

5. Transmission selon l'une quelconque des revendications 1 à 3, **caractérisée en ce que** le support de palier (1) et le cylindre (4) pour l'actionnement de l'embrayage à crabot sont réalisés sous forme d'un composant commun.

6. Transmission selon l'une quelconque des revendications précédentes, **caractérisée en ce que** le crabot d'accouplement (3, 3C) peut être actionné hydrauliquement en vue de son déplacement dans sa position fermée, un ressort de rappel (7, 7A) étant prévu pour retenir le crabot d'accouplement (3, 3C) dans sa position ouverte.

7. Transmission selon l'une quelconque des revendications 1 à 5, **caractérisée en ce que** le crabot d'accouplement (3A, 3B, 3D) peut être actionné hydrauliquement des deux côtés.

8. Transmission selon l'une quelconque des revendications précédentes, **caractérisée en ce que** la couronne dentée (10, 17) ou la denture enfichable (12, 13, 21, 24) sont réalisées sous forme bombée et/ou conique ou avec une contre-dépouille et/ou du côté frontal avec un biseau ou un rayon et/ou avec un cône de centrage.
